(19) **Europäisches Patentamt / European Patent Office / Office européen des brevets**

(11) **EP 2 810 987 B1**

(12) **EUROPEAN PATENT SPECIFICATION**

(45) Date of publication and mention
of the grant of the patent:
**30.03.2016 Bulletin 2016/13**

(51) Int Cl.:
***C08L 63/00*** (2006.01)     ***C08G 59/20*** (2006.01)
***C08J 5/04*** (2006.01)     ***C08K 7/02*** (2006.01)
***C08L 101/00*** (2006.01)

(21) Application number: **13743472.6**

(22) Date of filing: **29.01.2013**

(86) International application number:
**PCT/JP2013/051826**

(87) International publication number:
**WO 2013/115152 (08.08.2013 Gazette 2013/32)**

(54) **EPOXY RESIN COMPOSITION AND FIBER-REINFORCED COMPOSITE MATERIAL**

EPOXIDHARZZUSAMMENSETZUNG UND FASERVERSTÄRKTES VERBUNDMATERIAL

COMPOSITION DE RÉSINE ÉPOXY ET MATÉRIAU COMPOSITE RENFORCÉ PAR DES FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2012 JP 2012017883**

(43) Date of publication of application:
**10.12.2014 Bulletin 2014/50**

(73) Proprietor: **Toray Industries, Inc.**
**Tokyo 103-8666 (JP)**

(72) Inventors:
• **MATSUDA, Ayumi**
**Iyo-gun**
**Ehime 791-3193 (JP)**

• **KUNIMITSU, Yumi**
**Iyo-gun**
**Ehime 791-3193 (JP)**
• **KOCHI, Shinji**
**Iyo-gun**
**Ehime 791-3193 (JP)**

(74) Representative: **Webster, Jeremy Mark**
**Mewburn Ellis LLP**
**City Tower**
**40 Basinghall Street**
**London EC2V 5DE (GB)**

(56) References cited:
WO-A1-01/98411     WO-A1-2011/013326
JP-A- 2010 150 310     JP-A- 2011 157 491
JP-A- 2012 056 980     US-A- 5 075 356

**Description**

Technical Field

The present invention relates to an epoxy resin composition suitable particularly for filament winding molding and pultrusion molding, and fiber reinforced composite material produced therefrom.

Background Art

High in properties such as heat resistance and corrosion resistance as well as mechanical properties including strength and rigidity, in spite of being light in weight, fiber reinforced composite materials, which consist of reinforcing fiber, such as carbon fiber and glass fiber, and thermosetting resin, such as epoxy resin and phenolic resin, have been used in a wide variety of fields including aerospace, automobiles, railway vehicles, ships, civil engineering, construction, and sports goods. In particular, fiber reinforced composite materials containing continuous reinforcing fiber have been used for applications that require high performance. Reinforcing fibers and matrix resins that are used frequently include carbon fiber, which is high in specific strength and specific modulus, and thermosetting resin, particularly epoxy resin, which is high in adhesiveness to carbon fiber, respectively.

To produce fiber reinforced composite material, an appropriate one to be used may be selected from among such methods as prepreg lay-up, hand lay-up, filament winding, pultrusion (pultrusion molding), and RTM (resin transfer molding). In particular, the prepreg lay-up method has been in wide use because of its capability to produce fiber reinforced composite material with both high quality and high performance.

In the filament winding method and pultrusion molding method, on the other hand, bundles of reinforcing fiber containing several thousands to several tens of thousands of filaments aligned in one direction are passed through a resin bath containing liquid-state matrix resin to impregnate the bundles of reinforcing fiber with the matrix resin. Subsequently, in the filament winding method, bundles of reinforcing fiber impregnated with a matrix resin are wound up on a rotating mandrel and cured. In the pultrusion molding method, the bundles of reinforcing fiber impregnated with a matrix resin are passed through a squeeze die and heating die and then continuously pultruded by a pulling machine while being cured. For these molding methods, it is necessary for the resin composition to be adequately low in viscosity because the bundles of reinforcing fiber have to be impregnated continuously with the resin composition. For the production of large-size moldings, in particular, it is necessary for the resin composition to have a long pot life because the resin composition has to stay in a resin bath for a long period of time.

Resin compositions that are known to be suitable for these molding methods include, for instance, resin compositions containing epoxy resin, acid anhydride, and imidazole as proposed in Patent document 1 and Patent document 2.

Cured epoxy resin produced by curing an epoxy resin composition is generally brittle and therefore, it is difficult for fiber reinforced composite material containing an epoxy resin composition as matrix resin to maintain the high strength characteristic of the reinforcing fiber. Thus, known methods to provide cured epoxy resin with high toughness adopt the addition of rubber or a thermoplastic polymer to the epoxy resin composition used. The methods to add rubber to an epoxy resin composition proposed so far include, for instance, the addition of carboxyl-terminated butadiene-acrylonitrile copolymer rubber (CTBN) and the addition of nitrile rubber as described in

Patent document 3 and Patent document 4, respectively.

In addition, investigations have been made aiming to develop a method to produce cured epoxy resin with various additional characteristics. To enhance the insulation reliability, Patent document 5, for instance, has proposed to add a large quantity of silica particles to an epoxy resin composition.

Prior Art Documents

Patent Documents

Patent document 1: Japanese Unexamined Patent Publication (Kokai) No. 2005-343112
Patent document 2: Japanese Unexamined Patent Publication (Kokai) No. 2011-89071
Patent document 3: Japanese Unexamined Patent Publication (Kokai) No. SHO 58-82755
Patent document 4: Japanese Unexamined Patent Publication (Kokai) No. HEI 7-149952
Patent document 5: Japanese Unexamined Patent Publication (Kokai) No. 2008-195782

Summary of the Invention

Problems to be Solved by the Invention

However, the resin compositions proposed in Patent document 1 and Patent document 2 have the problem of shortening of pot life and a decrease in continuous productivity because of their high reactivity.

The methods proposed in Patent document 3 and Patent document 4 have the disadvantage that an increase in viscosity occurs in the resin composition as a rubber component is dissolved in the epoxy resin. In addition, since they include a step in which the rubber component undergoes phase separation as they cure, they have the disadvantage that the intended increase in toughness may not be achieved as the morphology of cured material changes depending on the type of the epoxy resin composition and difference in cure conditions. Furthermore, part of the rubber component dissolves in the epoxy resin phase, leading to the problems of a decrease in Tg of the cured epoxy resin and a decrease in its elastic modulus.

Epoxy resin compositions produced by the method proposed in Patent document 5 are high in viscosity, and therefore, such resin compositions are not suitable for continuous impregnation of bundles of reinforcing fiber.

For these reasons, there have been calls for fiber reinforced composite materials with high heat resistance and fracture toughness and epoxy resin compositions that serve for their production.

In view of such a background, an object of the present invention is to provide fiber reinforced composite material with high heat resistance and high toughness and an epoxy resin composition with both a low viscosity and a long pot life that serves effectively for the production thereof. Means of Solving the Problems

The present invention adopts the following means to solve the problem. Specifically, the present invention provides an epoxy resin composition including at least the constitute elements [A] to [E] given below, having a viscosity of 3,000 mPa•s or less at 25°C, and showing a viscosity of 4,500 mPa•s or less in 3 hours after the start of measurement when subjected to continued measurement for 3 hours at a temperature of 25°C.

     [A] epoxy resin having an aromatic ring in a molecule
     [B] aliphatic epoxy resin having a neopentyl structure in a molecule
     [C] acid anhydride
     [D] salt of either diazabicycloundecene or diazabicyclononene and an organic compound
     [E] core shell polymer particles

According to a preferable embodiment of the epoxy resin composition of the present invention, component [D] is either a salt of diazabicycloundecene and 2-ethyl hexanoic acid or a salt of diazabicycloundecene and phenol resin, and component [B] is either neopentyl glycol diglycidyl ether or pentaerythritol polyglycidyl ether.

According to a more preferable embodiment of the epoxy resin composition of the present invention, component [A] accounts for 70 to 95 parts by mass of the total 100 parts by mass of epoxy resin; component [B] accounts for 5 to 30 parts by mass of the total 100 parts by mass of epoxy resin; component [D] accounts for 0.1 to 3 parts by mass relative to the total 100 parts by mass of epoxy resin; and component [E] accounts for 5 to 30 parts by mass relative to the total 100 parts by mass of epoxy resin.

The fiber reinforced composite material according to the present invention contains a cured product of the epoxy resin composition according to the present invention and reinforcing fiber. According to a preferable embodiment of the fiber reinforced composite material of the present invention, the reinforcing fiber is carbon fiber having a tensile modulus in the range of 180 to 400 GPa.

Advantageous Effect of the Invention

The epoxy resin composition according to the present invention has both a low viscosity and a long pot life, and accordingly, works favorably for continuous impregnation of bundles of reinforcing fiber. Therefore, the epoxy resin composition according to the present invention can be used favorably for filament winding molding or pultrusion molding in particular. In addition, since its cured product has a high heat resistance and toughness, fiber reinforced composite material produced from the epoxy resin composition according to the present invention has a high heat resistance and toughness. With this feature, the fiber reinforced composite material according to the present invention can serve for a variety of fields including aerospace, automobiles, railroad vehicles, ships, civil engineering construction, and sporting goods.

Description of Preferred Embodiments

The epoxy resin composition according to the present invention includes at least components [A] to [E] given below:

[A] epoxy resin having an aromatic ring in a molecule
[B] aliphatic epoxy resin having a neopentyl structure in a molecule
[C] acid anhydride
[D] salt of either diazabicycloundecene or diazabicyclononene and an organic compound
[E] core shell polymer particles

The epoxy resin having an aromatic ring in a molecule, that is, component [A], is included in order to increase the heat resistance and elastic modulus of the epoxy resin composition. It should be noted that for the present invention, epoxy resin refers to a compound having a plurality of epoxy groups in one molecule. Furthermore, an epoxy resin composition refers to an uncured-state mixture that contains epoxy resin, a component designed for curing the epoxy resin (generally called a curing agent, curing catalyst, or curing accelerator), and, if necessary, appropriately selected modifying agents (such as plasticizer, dye, organic pigment, inorganic filler, polymer compound, antioxidant, ultraviolet absorber, coupling agent, and surface active agent).

Examples of such epoxy resin include, for instance, bisphenol type epoxy resins such as bisphenol A type epoxy resin, bisphenol F type epoxy resin, bisphenol AD type epoxy resin, and bisphenol S type epoxy resin; brominated epoxy resins such as tetrabromobisphenol A diglycidyl ether; epoxy resins having a biphenyl backbone; epoxy resins having a naphthalene backbone; epoxy resins having a dicyclopentadiene backbone; novolac type epoxy resins such as phenol novolac type epoxy resin, and cresol novolac type epoxy resin; biphenyl aralkyl type or xyloc type epoxy resin; glycidyl amine type epoxy resins such as N,N,O-triglycidyl-m-aminophenol, N,N,O-triglycidyl-p-aminophenol, N,N,O-triglycidyl-4-amino-3-methyl phenol, N,N,N',N'-tetraglycidyl-4,4'-methylene dianiline, N,N,N',N'-tetraglycidyl-2,2'-diethyl-4,4'-methylene dianiline, N,N,N',N'-tetraglycidyl-m-xylylene diamine, N,N-diglycidyl aniline, and N,N-diglycidyl-o-toluidine; and others such as resorcin diglycidyl ether, and triglycidyl isocyanurate. In particular, liquid-state glycidyl amine type epoxy resin that has a nitrogen atom has a high heat resistance and can be used favorably.

The blending quantity of component [A] is preferably in the range of 70 to 95 parts by mass of the total 100 parts by mass of all the epoxy resin components in order to obtain a cured product having a high elastic modulus and heat resistance, and it is more preferably in the range of 70 to 90 parts by mass, and still more preferably in the range of 80 to 90 parts by mass.

Here, the phrase "of the total 100 parts by mass of all the epoxy resin components" means that the blending quantity is based on the total amount of all the epoxy resin components, which account for 100 parts by mass, contained in the epoxy resin composition according to the present invention. Furthermore, "all the epoxy resin components" refers to the epoxy resin of component [A], the epoxy resin of component [B], and all the other epoxy resin components contained in the epoxy resin composition.

The aliphatic epoxy resin having a neopentyl structure in a molecule, that is, component [B], is used because it can largely decrease the viscosity while depressing the decrease in heat resistance, compared to other aliphatic epoxy resins.

Here, the neopentyl structure is a structure selected from a neopentyl glycol residue, trimethylolpropane residue, pentaerythritol residue, and so on. Specific examples of such epoxy resin include neopentyl glycol diglycidyl ether, trimethylolpropane polyglycidyl ether, and pentaerythritol polyglycidyl ether. In particular neopentyl glycol diglycidyl ether and pentaerythritol polyglycidyl ether can serve favorably because of their large viscosity dilution effect.

The blending quantity of component [B] is preferably in the range of 5 to 30 parts by mass of the total 100 parts by mass of all the epoxy resin components because it can largely decrease the viscosity of the epoxy resin composition at 25°C while depressing the decrease in the heat resistance of the cured product to be obtained, and it is more preferably in the range of 10 to 25 parts by mass and still more preferably in the range of 10 to 20 parts by mass.

The epoxy resin composition according to the present invention may contain appropriately selected epoxy resin components other than component [A] and component [B], such as alicyclic epoxy resin and monoepoxy resin containing an epoxy group in a molecule, unless they considerably reduce the heat resistance and mechanical properties.

The acid anhydride, that is, component [C], is added as a component that works to cure the epoxy resin, namely, a curing agent. There are no specific limitations on the acid anhydride, but it is preferably liquid at 25°C because the resulting epoxy resin composition will be lower in viscosity and serve for improved impregnation of bundles of reinforcing fiber. Specifically, the viscosity at 25° is preferably 600 mPa•s or less, more preferably 500 mPa•s or less. To determine the viscosity referred to herein, the Method for Viscosity Measurement with a Cone-Plate Type Rotary Viscometer specified in JIS Z8803 (2011) is performed to carry out measurement at a rotating speed of 10 rotations/min at a temperature of 25°C using an E type viscometer (TVE-30H manufactured by Toki Sangyo Co., Ltd.) equipped with a standard cone rotor (1°34'×R24), and the value obtained in one minute after the start of measure is taken. For the acid anhydride, that is, component [C], there are no specific limitations on the lower limit of its viscosity at a temperature of 25°C, and the viscosity is preferably as low as possible because the resulting epoxy resin composition will have a lower viscosity, leading to easier impregnation of bundles of reinforcing fiber.

Examples of the acid anhydride include, for instance, tetrahydrophthalic anhydride, methyl tetrahydrophthalic anhydride, hexahydrophthalic anhydride, methyl hexahydrophthalic anhydride, methyl nadic anhydride, trialkyl tetrahydrophthalic anhydride, and dodecyl succinic anhydride. In particular, methyl tetrahydrophthalic anhydride can be used favorably, particularly because it has a viscosity in a preferred range of 40 to 70 mPa•s and can serve to produce a cured product with a favorable heat resistance. Component [C] may be either a single anhydride compound or a mixture of a plurality of different compounds as necessary.

The blending quantity of the acid anhydride, that is, component [C], is decided on taking into account the types of the epoxy resin and acid anhydride to be used. Specifically, mixing is performed so that the quotient of the average acid anhydride equivalent mass divided by the average epoxy equivalent mass is preferably in the range of 0.5 to 1.5, more preferably 0.7 to 1.2, assuming that the average epoxy equivalent mass is equal to the total mass of all the epoxy resin components divided by the total number of the epoxy groups contained and that the average acid anhydride equivalent mass is equal to the total mass of all the acid anhydride components divided by the total number of the acid anhydride groups contained. If the ratio between the average epoxy equivalent mass and the average acid anhydride equivalent mass is in the appropriate range, the resulting epoxy resin composition will have a sufficiently low viscosity and accordingly, it will serve favorably for impregnation of bundles of reinforcing fiber when used to produce fiber reinforced composite material. Furthermore, a cured product with a high heat resistance, fracture toughness, and elastic modulus can be obtained.

The salt of either diazabicycloundecene or diazabicyclononene and an organic compound, that is, component [D], is added in order to serve as a curing catalyst (or curing accelerator) that accelerates the curing reaction of components [A] and [B] and the other epoxy resin components with the acid anhydride of component [C]. Curing catalysts that are generally used for acid anhydride based curing agents include, for instance, phosphorous compounds, tertiary amines, imidazole derivatives, Lewis acid/amine complexes. However, the addition of these curing catalysts may results in an epoxy resin composition with a shortened pot life, possibly leading to a decrease in workability. Compared to this, if the blending quantity of these curing catalysts is decreased in order to depress the shortening of pot life, they may fail to promote the curing reaction effectively. In particular, 1,8-diazabicyclo[5,4,0]-undeca-7-en (hereinafter occasionally referred to as DBU) and 1,5-diazabicyclo[4,3,0]-5-nonene (hereinafter occasionally referred to as DBN), which are tertiary amines, have the problem of shortening the pot life to a large extent although they have the features of showing good curing promotion effect and serving to produce a cured product with a heat resistance. However, the inventors have arrived at the present invention based on the finding that the use of a salt formed from either 1,8-diazabicyclo[5,4,0] undeca-7-en or 1,5-diazabicyclo[4,3,0]-5-nonene and an organic compound makes it possible to control the rate of the curing reaction and achieve a high heat resistance regardless of the heat resistance of the resulting cured product. The diazabicycloundecene compound to be used may be a diazabicycloundecene compound other than 1,8-diazabicyclo[5,4,0]-undeca-7-en. The diazabicyclononene compound to be used may be a diazabicyclononene compound other than 1,5-diazabicyclo[4,3,0]-5-nonene.

Useful organic compounds for forming the a salt of either diazabicycloundecene or diazabicyclononene and an organic compound, that is component [D], include organic acids and organic tetraborated products. Specific examples include carboxylic acids such as 2-ethyl hexanoic acid (octyl acid), formic acid, orthophthalic acid; phenols; p-toluene sulfonic acids; phenolic resins sa phenol novolac resin; and tetraphenyl borates. Of these, the use of 2-ethyl hexanoic acid or phenol resin is preferred because they are liquid with high handleability at 25°C, have a preferred pot life and curing promotion effect, and serve to produce a cured product with a high heat resistance.

The blending quantity of component [D] is preferably in the range of 0.1 to 3 parts by mass, more preferably 0.5 to 2.5 parts by mass, of the total 100 parts by mass of all the epoxy resin components because the curing temperature and pot life can be adjusted to optimally and a cured product with a high heat resistance can be obtained.

The core shell polymer particles, that is, component [E], are particles composed of a particulate core component whose surface is coated partly or entirely with a shell component, produced by preparing a particulate core component formed mainly of a crosslinked rubbery polymer or elastomer and graft-polymerizing a shell component polymer dissimilar to the core component onto its surface.

The core component of the core shell polymer particles may be silicone resin or a polymer produced by polymerizing one or a plurality of monomers selected from the group of vinyl monomer, conjugated diene monomer, acrylate monomer, and methacrylate monomer. Crosslinked rubbery polymers produced by polymerizing an aromatic vinyl monomer and conjugated diene monomer, such as styrene and butadiene in particular, show good toughness improving effect and can be used favorably.

It is preferable that the shell component of the core shell polymer particles be graft-polymerized onto the aforementioned core component so as to be chemically bonded to the polymer of the core component. Substances that can be used as the shell component include, for instance, polymers produced by polymerizing one or a plurality of monomers selected from acrylate, methacrylate, aromatic vinyl compounds, and so on. When a crosslinked rubbery polymer produced by polymerizing styrene and butadiene is used as the core component, a polymer produced from methyl methacrylate, which is an ester of methacrylic acid, and styrene, which is an aromatic vinyl compound, can be used favorably as the shell component.

The shell component may contain a functional group that can react with the epoxy resin composition in order to ensure a stable dispersed state. Examples of such a functional group include, for instance, hydroxyl group, carboxyl group, and epoxy group, of which the epoxy group is preferable. Available methods to introduce an epoxy group include, for instance, adding 2,3-epoxy propyl methacrylate as an additional constituent to the shell component and then graft-polymerizing it onto the core component.

There are no specific limitations on the core shell polymer particles to be applied to the epoxy resin composition according to the present invention, and those produced by a generally known method can be used. However, although core shell polymer particles are commonly prepared by producing lumps and pulverizing them into powder, and in many cases, such powdery core shell polymer particles are dispersed again in epoxy resin, but it is difficult for this method to disperse the primary particles in a stable state. Instead of separating the material in the form of lumps during the core shell polymer particles production process, it is preferable if a master batch composed of primary particles dispersed in epoxy resin is finally obtained. For instance, it can be produced by the method described in Japanese Unexamined Patent Publication (Kokai) No. 2004-315572, in which polymerization is carried out by a technique for polymerization in an aqueous medium, such as emulsion polymerization, dispersion polymerization, and suspension polymerization to provide a suspension containing dispersed core shell polymer particles, mixing the resulting suspension with an organic solvent with a partial solubility in water, such as acetone, methyl ethyl ketone, and other ether solvents, bringing the mixture in contact with an aqueous electrolyte, such as sodium chloride and chloride potassium, to effect phase separation between an organic solvent layer and a water layer, removing the water layer to provide an organic solvent containing dispersed core shell polymer particles, adding an appropriate amount of epoxy resin, and finally removing the organic solvent by evaporation. Kane Ace (registered trademark) commercially available from Kaneka Corporation can be used favorably as such a core shell polymer particle-dispersed epoxy master batch produced by the above production method.

When core shell polymer particles are applied to the epoxy resin composition according to the present invention, the core shell polymer particles preferably have an average particle diameter, specifically a volume average particle diameter, of 1 to 500 nm, more preferably 3 to 300 nm. Here, the volume average particle diameter can be measured by using a Nanotrac particle size distribution measuring apparatus (manufactured by Nikkiso Co., Ltd.). Core shell polymer particles with a volume average particle diameter of 1 nm or more can be produced relatively easily, leading to decreased costs. If the volume average particle diameter is 500 nm or less, the epoxy resin composition will be easily dispersed uniformly in the reinforcing fiber during the impregnation of the reinforcing fiber.

With respect to the blending quantity of component [E], it preferably accounts for 5 to 30 parts by mass, more preferably 10 to 25 parts by mass, of the total 100 parts by mass of all the epoxy resin components. If the blending quantity is 5 parts by mass or more, it will be easy to achieve a fracture toughness that is required in fiber reinforced composite material after molding. If the blending quantity is 30 parts by mass or less, the resulting epoxy resin composition is inhibited from having a high viscosity, leading to easy impregnation of the reinforcing fiber with the epoxy resin composition.

The epoxy resin composition according to the present invention may contain appropriate amounts of a plasticizer, dye, organic pigment, inorganic filler, polymer compound, antioxidant, ultraviolet absorber, coupling agent, surface active agent, and so on, unless they will lead to largely deteriorated physical properties in a cured product which is produced by heat curing or a fiber reinforced composite material produced from the cured product and reinforcing fiber.

If the epoxy resin composition according to the present invention is in an uncured state, the blending quantity of each component can be determined by using a combination of various analysis methods such as infrared absorption analysis (abbreviated as IR), hydrogen-magnetic nuclear resonance (abbreviated as $^1$H-NMR), carbon-13 magnetic nuclear resonance (abbreviated as $^{13}$C-NMR), gas chromatography mass spectroscopy analysis (abbreviated as GC-MS), and high performance liquid chromatography (abbreviated as HPLC). For instance, the epoxy resin composition according to the present invention may be dissolved in a single or mixed solvent of water, alcohols, acetonitrile, dichloromethane, or trifluoroacetic acid, and then filtered to remove impurities, followed by separation of the supernatant liquid by HPLC and analysis by IR. The aforementioned method may serve to identify the components contained in the resin composition, and the epoxy equivalent mass of the epoxy resin component contained can be calculated from the information obtained concerning the molecular weight and number of epoxy groups.

Epoxy resin compositions are generally divided into one-pack type ones that combine epoxy resin and a curing agent, which is designed to cure the epoxy resin, and two-pack ones that consist of epoxy resin and a curing agent that are stored separately and combined immediately before use.

In the case of one-pack epoxy resin compositions, the curing reaction progresses even during storage, and accordingly, a solid-state curing agent component with a low reactivity is used in most cases. However, the curing reaction progresses slowly at room temperature, and accordingly, cold storage is necessary, leading to increased management costs. Furthermore, since a solid-state curing agent is used, the impregnation of bundles of reinforcing fiber with a one-pack epoxy resin composition requires applying a high pressure using a press roll, leading to increased production cost as well.

In the case of two-pack epoxy resin compositions, on the other hand, the base resin composed mainly of epoxy resin and the curing agent are stored separately and therefore, there are no specific limitations on the storage conditions and long term storage will be possible. Furthermore, if both the base resin and curing agent are liquid, the mixture of the base resin and the curing agent can also be liquid with a low viscosity and the epoxy resin composition will serve to impregnate bundles of reinforcing fiber by a simple method such as filament winding, pultrusion molding, and RTM.

The epoxy resin composition according to the present invention is not limited to either the one-pack type or two-pack type, but the two-pack type is recommended because of the above advantage.

If the epoxy resin composition according to the present invention is used in the form of a two-pack composition, it is preferable that a mixture of components [A], [B], and [E] be used as base resin while a mixture of components [C] and [D] be used as curing agent. Furthermore, other components as described above may be contained either in the base resin pack or in the curing agent pack if the components are not reactive with them. If such other components are reactive with either the base resin or the curing agent, it is desirable for them to be contained in either pack with which they are not reactive.

It is necessary for the epoxy resin composition according to the present invention to be low in viscosity in order to ensure improved impregnation of bundles of reinforcing fiber. Specifically, its viscosity at 25°C should be 3,000 mPa•s or less, preferably 2,800 mPa•s, and more preferably 2,600 mPa•s. To determine the viscosity referred to herein, the Method for Viscosity Measurement with a Cone-Plate Type Rotary Viscometer specified in JIS Z8803 (2011) is performed to carry out measurement at a rotating speed of 10 rotations/min at a temperature of 25°C using an E type viscometer (TVE-30H manufactured by Toki Sangyo Co., Ltd.) equipped with a standard cone rotor (1°34'×R24), and the value obtained in one minute after the start of measure is taken. For the epoxy resin composition according to the present invention, there are no specific limitations on the lower limit of its viscosity at a temperature of 25°C, and the viscosity is preferably as low as possible because the resulting epoxy resin composition will have a lower viscosity, leading to easier impregnation of bundles of reinforcing fiber.

When the epoxy resin composition according to the present invention is subjected to filament winding molding or pultrusion molding, bundles of reinforcing fiber are passed through a resin bath containing an epoxy resin composition so that the bundles of reinforcing fiber are impregnated with the epoxy resin composition. As the bundles of reinforcing fiber are supplied continuously, the epoxy resin composition must maintain flowability in the resin bath. Accordingly, it is necessary for the epoxy resin composition to have a long pot life. The pot life can be examined on the basis of the change in viscosity as indicator. Specifically, in a test in which the viscosity of an epoxy resin composition is measured continuously for 3 hours from the start of measurement at a temperature of 25°C, the viscosity determined in 3 hours after the start of measurement is preferably 4,500 mPa•s or less, more preferably 4000 mPa•s or less, and still more preferably 3500 mPa•s or less, because the required frequency of replacing the epoxy resin composition in the resin bath during molding work can be decreased, leading to an improved workability.

The epoxy resin composition according to the present invention may be heated at an appropriate temperature in the range of 80 to 230°C for an appropriate period in the range of 0.5 to 10 hours to accelerate the crosslinking reaction and thereby produce a cured product. With respect to the heating conditions, the heating may be carried out in a single stage or under multi-stage conditions, that is, a combination of a plurality of sets of heating conditions.

It is preferable furthermore that a cured product obtained by heat-curing the epoxy resin composition according to the present invention for 2 hours at a temperature of Tc (°C) have a glass transition temperature Tg (°C) that meets Equation (1) given below.

$$Tg \geq Tc - 15 \ (°C) \qquad \text{Equation (1)}$$

Here, the glass transition temperature refers to the midpoint temperature (Tm) determined by DSC according to JIS K7121 (1987). The measuring equipment to be used is a differential scanning calorimeter DSC Q2000 (manufactured by TA Instruments), and measurements are made in the modulated mode at a heating rate of 5°C/min in a nitrogen gas atmosphere.

The curing temperature Tc (°C) is the temperature at which the epoxy resin composition according to the present invention is cured. Tc is preferably 80°C or more, more preferably 100°C or more, and still more preferably 130°C or more. It is preferable to produce a cured product with a glass transition temperature that meets Equation (1) by heat-curing at a Tc of 80°C or more for 2 hours, because it is possible to produce fiber reinforced composite material that will not suffer from deterioration in mechanical properties attributable to strain and deformation caused in the fiber reinforced composite material at the environment temperature at which the fiber reinforced composite material produced from the epoxy resin composition is used, and fiber reinforced composite material with high environmental resistance can be obtained. There are no specific limitations on the upper limit of Tc, but it is preferably 230°C or less because cured products of epoxy resin compositions generally start undergoing heat decomposition at about 240°C. Here, the epoxy resin composition is not required to meet the requirement of Equation (1) over the entire curable temperature range, but only required to meet the requirement of Equation (1) at an optimum curing temperature Tc (°C) that is determined from the constitution of the epoxy resin composition.

If a cured product obtained by heat-curing the epoxy resin composition according to the present invention at a temperature of 180°C for 2 hours preferably has a fracture toughness (mode-I critical stress intensity factor $K_{Ic}$) of 0.5 MPa•m$^{0.5}$ or more, more preferably 0.9 MPa•m$^{0.5}$ or more, at a temperature of 25°C. If $K_{Ic}$ is 0.5 MPa•m$^{0.5}$ or more at a temperature of 25°C, fiber reinforced composite material produced from the epoxy resin composition will not undergo significant deterioration in mechanical properties and damage attributable to fatigue due to repeated use, and therefore, fiber reinforced composite material with good fatigue characteristics can be obtained. There are no specific limitations on the upper limit of $K_{Ic}$ at a temperature of 25°C, and as this value increase, fiber reinforced composite material produced from the epoxy resin composition will have better fatigue characteristics.

The epoxy resin composition according to the present invention can be processed into fiber reinforced composite material by combining its cured product with reinforcing fiber.

Preferred examples of the reinforcing fiber include glass fiber, aramid fiber, polyethylene fiber, silicon carbide fiber, and carbon fiber. In particular, carbon fiber is preferred because it is light and high in performance and serves to produce fiber reinforced composite material with good mechanical characteristics.

Carbon fibers are classified into different categories such as polyacrylonitrile based carbon fibers, rayon based carbon fibers, and pitch based carbon fibers. Of these, polyacrylonitrile based carbon fibers, which have high tensile strength, are used favorably. A polyacrylonitrile based carbon fiber may be produced through, for example, a process as described below. A spinning solution that contains polyacrylonitrile produced from monomers mainly formed of acrylonitrile is spun by wet spinning, dry-wet spinning, dry spinning, or melt spinning. To produce carbon fiber, the coagulated thread resulting from this spinning is subjected to a yarn-making step to provide a precursor, which is then subjected to subsequent steps such as flameproofing and carbonization.

The carbon fiber to be used may be in the form of twisted yarns, untwisted yarns, or twistless yarns. In the case of twisted yarns, the filaments in the bundles of reinforcing fiber are not parallel and accordingly, the resulting fiber reinforced composite material will tend to have poor mechanical characteristics. Therefore, untwisted yarns or twistless yarns are preferred because fiber reinforced composite material having moldability and strength characteristics in a good balance can be obtained.

When carbon fiber is used as reinforcing fiber, it is preferable that a bundle of carbon fiber contain 2,000 to 70,000 filaments while the fineness per single yarn be in the range of 50 to 5,000 tex, and more preferably it contains 10,000 to 60,000 filaments while the fineness per single yarn is in the range of 100 to 2,000 tex. Here, the fineness (tex) refers to the mass per 1,000 m (g/1,000m) of a single yarn. It has been difficult for the conventional techniques to impregnate carbon fiber composed of 2,000 to 70,000 filaments and having a single yarn fineness of 50 to 5,000 tex with an epoxy resin composition, but the epoxy resin composition according to the present invention is so low in viscosity that the epoxy resin composition can penetrate into among single yarns easily.

Such carbon fiber preferably has a tensile modulus in the range of 180 to 400 GPa. If the tensile modulus is in this range, it is possible to produce fiber reinforced composite material with rigidity, allowing lightweight moldings to be obtained. If it is in this range, furthermore, the carbon fiber itself can maintain strength, although the strength of carbon fiber tends to decrease with an increasing elastic modulus. The elastic modulus is more preferably in the range of 200 to 370 GPa, still more preferably in the range of 220 to 350 GPa. Here, the tensile modulus of carbon fiber is measured according to JIS R7601-2006.

Commercial products of carbon fiber include Torayca (registered trademark) T700SC-12000 (tensile strength: 4.9 GPa, tensile modulus: 230 GPa), Torayca (registered trademark) T800HB-12000 (tensile strength: 5.5 GPa, tensile modulus: 294 GPa), Torayca (registered trademark) T800SC-24000 (tensile strength: 5.9 GPa, tensile modulus: 294 GPa), and Torayca (registered trademark) M40JB-12000 (tensile strength: 4.4 GPa, tensile modulus: 377 GPa) (all these were manufactured by Toray Industries, Inc.).

For the production of fiber reinforced composite material, generally known molding methods can be used, including the hand lay-up method, hot melt impregnated prepreg method, wet impregnated prepreg method, filament winding method, pultrusion molding method, and resin transfer molding method. For instance, in the case of the filament winding method, which is suitable for molding of tubular products, bundles of reinforcing fiber are immersed and passed through a resin bath containing the epoxy resin composition according to the present invention, wound up on a rotating bar (mandrel) while being impregnated with the epoxy resin composition, heat-cured, and then removed from the mandrel to provide fiber reinforced composite material. In the case of pultrusion molding, which can perform continuous molding to produce long-sized products, bundles of reinforcing fiber are passed continuously through a resin bath containing the epoxy resin composition according to the present invention, pulled continuously by a puling machine through a squeeze die and heating die to perform pultrusion molding of the bundles of reinforcing fiber impregnated with the epoxy resin composition while curing the epoxy resin composition to provide fiber reinforced composite material.

Having high heat resistance, mechanical properties, and impact resistance, the fiber reinforced composite material according to the present invention can be applied to a variety of fields such as aerospace, automobiles, railroad vehicles, ships, civil engineering, construction, and sporting goods. In particular, it can be used favorably for producing tubular moldings and cables.

Examples

The epoxy resin composition and fiber composite material according to the present invention are described in more detail below with reference to Examples. Determination of these physical properties was performed in an environment with a temperature of 23°C and relative humidity of 50% unless otherwise specified.

<Materials used>

(Component [A] epoxy resin)

- N,N,N',N'-tetraglycidyl-4,4'-diaminodiphenyl methane: Araldite (registered trademark) MY721, manufactured by Huntsman Japan KK
- liquid bisphenol F type epoxy resin: jER(registered trademark) 806, manufactured by Mitsubishi Chemical Corporation
- solid bisphenol F type epoxy resin: Epotohto (registered trademark) YDF-2001, manufactured by Nippon Steel & Sumitomo Metal Corporation
- p-aminophenol type epoxy resin: Araldite (registered trademark) MY0510, manufactured by Huntsman Japan KK
- phenol novolac-type epoxy resin: jER(registered trademark) 154, manufactured by Mitsubishi Chemical Corporation
- N,N,N',N'-tetraglycidyl-m-xylylene diamine: Tetrad (registered trademark) X, manufactured by Mitsubishi Gas Chemical Co., Inc.
- biphenyl type epoxy resin: jER(registered trademark) YX4000, manufactured by Mitsubishi Chemical Corporation
- naphthalene type epoxy resin: Epicron (registered trademark) HP4700, manufactured by DIC
- dicyclopentadiene type epoxy resin: Epicron (registered trademark) HP7200, manufactured by DIC
- biphenyl aralkyl type epoxy resin: NC3000, manufactured by Nippon Kayaku Co., Ltd.
- bisphenol S type epoxy resin: Epicron (registered trademark) EXA1514, manufactured by DIC
- N,N-glycidyl aniline: GAN, manufactured by Nippon Kayaku Co., Ltd.

(Component [B] epoxy resin)

- neopentyl glycol diglycidyl ether: Denacol (registered trademark) EX-211, manufactured by Nagase ChemteX Corporation
- pentaerythritol polyglycidyl ether: Denacol (registered trademark) EX-411, manufactured by Nagase ChemteX Corporation

(Epoxy resin other than components [A] and [B])

- alicyclic epoxy resin: Celloxide (registered trademark) 2021P, manufactured by Daicel Corporation

(Component [C] acid anhydride)

- methyl tetrahydrophthalic anhydride: HN-2200, manufactured by Hitachi Chemical Co., Ltd.
- methyl endo-methylene tetrahydrophthalic anhydride: Kayahard (registered trademark) MCD, manufactured by Nippon Kayaku Co., Ltd.

(Component [D] salt of DBU and organic compound)

- DBU/2-ethyl hexanoic acid salt: U-CAT(registered trademark) SA102, manufactured by San-Apro Ltd.
- DBU/phenol novolac resin salt: U-CAT(registered trademark) SA841, manufactured by San-Apro Ltd.
- DBU/phenol salt: U-CAT(registered trademark) SA1, manufactured by San-Apro Ltd.

(Curing catalyst other than component [D])

- 1-benzyl-2-methyl imidazole: Curezol (registered trademark) 1B2MZ, manufactured by Shikoku Chemicals Corporation

(Component [E] core shell polymer particles)

- Kane Ace (registered trademark) MX-113: manufactured by Kaneka Corporation A master batch containing 67 mass% of liquid-state bisphenol A type epoxy resin (D.E.R.(registered trademark) 383, manufactured by The Dow Chemical Company, corresponding to component [A]) and 33 mass% of core shell polymer particles (corresponding to component [E])
- Kane Ace (registered trademark) MX-267: manufactured by Kaneka Corporation A master batch containing 63 mass% of liquid-state bisphenol F type epoxy resin (Epon (registered trademark) 863, manufactured by Momentive Specialty Chemicals, corresponding to component [A]) and 37 mass% of core shell polymer particles (corresponding to component [E])
- Kane Ace (registered trademark) MX-416: manufactured by Kaneka Corporation A master batch containing 75 mass% of N,N,N',N'-tetraglycidyl-4,4'-diaminodiphenyl methane (Araldite (registered trademark) MY721, manufactured by Huntsman Japan KK, corresponding to component [A]) and 25 mass% of core shell polymer particles (corresponding to component [E])

(Reinforcing fiber)

- Torayca (registered trademark) T700SC-12000 (tensile strength 4.9 GPa, tensile modulus 230 GPa)

<Epoxy resin composition preparation method>

(A case where solid-state epoxy resin is not contained)

Epoxy resins of components [A] and [B] were put in a metal beaker, heated to a temperature of 60°C, and heat-kneaded for 30 minutes. Subsequently, while kneading is continued, the mixture was cooled down to a temperature of 50°C or less, and the core shell polymer particles of component [E] were added, followed by additional stirring for 15 minutes. While kneading is continued, the mixture was cooled down to a temperature of 30°C or less, and the acid anhydride of component [C] and the salt of DBU and an organic compound of component [D] were added, followed by stirring for 10 minutes to provide an epoxy resin composition.

(A case where solid-state epoxy resin is contained)

Epoxy resins of components [A] and [B] were put in a metal beaker, heated up to a temperature as specified in the tables, and heat-kneaded for 30 minutes. Here, the method described later was carried out to confirm that the mixture contained no solid bodies of the solid-state epoxy resin. Subsequently, while kneading is continued, the mixture was cooled down to a temperature of 50°C or less, and the core shell polymer particles of component [E] were added, followed by additional stirring for 15 minutes. While kneading is continued, the mixture was cooled down to a temperature of 30°C or less, and the acid anhydride of component [C] and the salt of DBU and an organic compound of component [D] were added, followed by additional stirring for 10 minutes to provide an epoxy resin composition.

<Confirmation method for solid bodies of solid-state epoxy resin>

If a solid-state epoxy resin component is used in the resin preparation method described above, the epoxy resins of component [A] and component [B] are blended in the kneading equipment, heated up to a temperature of 100°C, and heat-kneaded for 30 minutes, and an appropriate quantity of the mixture was taken on a slide glass, covered with a cover glass, and observed by transmission optical microscopy at a magnification of 5 times to check if there existed solid bodies of solid-state epoxy resin of 0.1 $\mu$m or more.

<Measurement of viscosity of epoxy resin composition at 25°C>

To determine the viscosity of the resulting epoxy resin composition at 25°C, the Method for Viscosity Measurement with a Cone-Flat Plate Type Rotary Viscometer specified in JIS Z8803 (2011) is performed to carry out measurement at a rotating speed of 10 rotations/min using an E type viscometer (TVE-30H manufactured by Toki Sangyo Co., Ltd.) equipped with a standard cone rotor (1°34' × R24). In determining the viscosity, the epoxy resin composition was fed to the equipment set at 25°C, and the viscosity measured in 1 minute was adopted as the initial viscosity $\eta^*$. Furthermore, measurement at a temperature of 25°C was continued for 3 hours from the start of measurement, and the viscosity ($\eta^{*'}$) was measured at the point 3 hours from the start.

<Measurement of fracture toughness ($K_{Ic}$) of cured epoxy resin>

The epoxy resin composition was injected into a mold having cavity in the form of a plate with a thickness of 6 mm, heated up in a hot air oven at a rate of 1.5°C per minute from room temperature to a temperature of 180°C, and maintained at the temperature of 180°C for 2 hours to cure the epoxy resin composition. Then, it was cooled down at a rate of 2.5°C per minute from the temperature of 180°C to room temperature and removed out of the mold to prepare a cured resin plate with a thickness of 6 mm. The resulting cured resin plate was processed to prepare a test piece as specified in ASTM D5045-99, which was then subjected to measurement in an environment at 23°C according to ASTM D5045-99.

<Measurement of glass transition temperature (Tg) of cured epoxy resin>

The epoxy resin composition was injected into a mold having a cavity in the form of a plate with a thickness of 2 mm, heated up in a hot air oven at a rate of 1.5°C per minute from room temperature to the curing temperature (Tc), and maintained at the temperature for 2 hours to cure the epoxy resin composition. Then, it was cooled down at a rate of 2.5°C per minute from the curing temperature (Tc) to room temperature and removed out of the mold to prepare a cured resin plate with a thickness of 2 mm. From the resulting cured resin plate, a small piece (5 to 10 mg) was sampled and subjected to measurement of the midpoint glass transition temperature (Tmg) according to JIS K7121 (1987). The measuring equipment used was a differential scanning calorimeter DSC Q2000 (manufactured by TA Instruments), and measurements were made in the modulated mode at a heating rate of 5°C/min in a nitrogen gas atmosphere.

<Method for pultrusion molding of fiber reinforced composite material>

Four rovings (48,000 fiber filaments in total) of the aforementioned carbon fiber were passed through an impregnation tank retaining an epoxy resin composition at room temperature to impregnate the carbon fiber with the epoxy resin composition. Furthermore, the carbon fiber impregnated with the epoxy resin composition was passed through a squeeze die and a heating die and pultruded by a pulling machine while being cured to undergo continuous molding. The molding was performed under the conditions of a heating die temperature setting of 180°C and a heating die passage time (heating period) of 2 minutes to produce cable-like carbon fiber reinforced composite material with a diameter of 2 mm.

<Evaluation of impregnation of fiber reinforced composite material>

A piece of about 2 cm was cut out of the resulting fiber reinforced composite material and one of its surface was polished to eliminate visually detectable flaws. Subsequently, a laser microscope was used to perform observation at a magnification of 5 times or more to check for voids.

<Example 1>

An epoxy resin composition was prepared from the materials listed below by the aforementioned epoxy resin composition preparation method.

Component [A]: Araldite (registered trademark) MY721 80 parts by mass
Component [E]: Kane Ace (registered trademark) MX-416 20 parts by mass
(consisting of 5 parts by mass of core shell polymer particles (corresponding to component [E]) and 15 parts by mass of Araldite (registered trademark) MY721 (corresponding to component [A])) Component [B]: Denacol (registered trademark) EX-211 5 parts by mass
Component [C]: HN-2200 133 parts by mass
Component [D]: U-CAT (registered trademark) SA841 2.5 parts by mass

[Characteristics of resin composition]

The viscosity of the resulting epoxy resin composition at 25°C was measured by the aforementioned method, and results showed that the initial viscosity $\eta^*$ and the viscosity measured in 3 hours $\eta^{*\prime}$ were 705 mPa•s and 1,520 mPa•s, respectively, proving that the composition had both a low viscosity and a favorable pot life.

[Characteristics of cured epoxy resin]

The $K_{Ic}$ of the cured product measured by the aforementioned method was 0.5 MPa•m$^{0.5}$. Furthermore, its Tg was 210°C and met Equation (1), proving a high heat resistance.

[Characteristics of fiber reinforced composite material]

Fiber reinforced composite material was prepared from the epoxy resin composition by the aforementioned pultrusion molding method and examined by the aforementioned method, and it was found that the fiber reinforced composite material had been impregnated favorably with no voids detected in its interior.

[Examples 2 to 33 and Comparative examples 1 to 4]

Except for using the components given in Tables 1 to 6, the same procedures as in Example 1 were carried out to provide epoxy resin compositions and fiber reinforced composite materials. Results are shown in Tables 1 and 6.

The epoxy resin compositions obtained in Examples 2 to 33 had a low viscosity and favored pot life, and the cured products obtained also had a high toughness and heat resistance. The fiber reinforced composite materials were impregnated favorably with no voids detected in their interior.

In Example 9, the blending quantity of component [A] and that of component [B] were set to 60 parts by mass and 40 parts by mass, respectively, and accordingly, the cured product obtained at a Tc of 135°C had a Tg of 105°C, which failed to meet Equation (1), resulting in a slightly inferior heat resistance.

In Example 10, the blending quantity of component [E] was set to 4 parts by mass, and accordingly, the resulting cured product had a $K_{Ic}$ of 0.4 MPa•m$^{0.5}$, indicating a slightly inferior toughness.

In Example 20, the blending quantity of component [E] was set to 3 parts by mass, and the resulting cured product had a lower $K_{Ic}$ compared to Example 19.

In Example 21, the blending quantity of component [D] was set to 4 parts by mass, and accordingly, the viscosity of the resulting epoxy resin composition measured in 3 hours at 25°C was higher than that in Example 19, leading to a reasonably high workability in spite of an inferior pot life.

In Example 23, the blending quantity of component [A] was set to 65 parts, and accordingly, the resulting cured product obtained at a Tc of 135°C had a lower Tg compared to Example 22.

In Example 24, the blending quantity of component [B] was set to 20 parts by mass, and accordingly, the initial viscosity and the 3-hour viscosity at 25°C of the resulting epoxy resin composition were lower than those in Example 22, leading to an improved workability.

In Example 25, the blending quantity of component [B] was set to 1 part by mass, and accordingly, the initial viscosity and the 3-hour viscosity at 25°C of the resulting epoxy resin composition were higher than those in Example 19, leading to a reasonably high workability in spite of an inferior pot life.

In Example 27, the blending quantity of component [D] was set to 0.1 part by mass, and accordingly, the cured product obtained at a Tc of 135°C had a lower Tg compared to that in Example 26.

In Example 29, the blending quantity of component [E] was set to 32 parts by mass, and accordingly, the initial viscosity and the 3-hour viscosity at 25°C of the resulting epoxy resin composition were higher than those in Example 28, leading to a reasonably high workability in spite of an inferior pot life.

In Examples 30 and 31, jER (registered trademark) 806 was used as component [A], and accordingly, the resulting cured product obtained at a Tc of 180°C had a lower Tg compared to Example 1.

In Example 32, U-CAT (registered trademark) SA1 was used as component [D], and accordingly, the 3-hour viscosity at 25°C of the resulting epoxy resin composition was higher than that in Example 28, leading to a reasonably high workability in spite of an inferior pot life.

In Comparative example 1, the resulting epoxy resin composition was subjected to viscosity measurement at 25°C according to the aforementioned method, and results showed that the initial viscosity $\eta^*$ and the 3-hour viscosity $\eta^{*'}$ were 685 mPa•s and more than 4,500 mPa•s, respectively, leading to a short pot life and an inferior workability. In addition, fiber reinforced composite material was prepared from the epoxy resin composition by the aforementioned pultrusion molding method and examined by the aforementioned method, and it was found that the fiber reinforced composite material contained voids in its interior, indicating inferior impregnation.

In Comparative example 2, the cured product had a $K_{Ic}$ of 0.3 MPa•m$^{0.5}$, indicating a low toughness.

In Comparative example 3, the cured product had a $K_{Ic}$ of 0.3 MPa•m$^{0.5}$, indicating a low toughness. Furthermore, the cured product prepared at a Tc of 135°C by the aforementioned method had a Tg of 70°C, which fails to meet Equation (1), leading to an inferior heat resistance.

In Comparative example 4, viscosity measurement at 25°C of the resulting epoxy resin composition showed that the initial viscosity $\eta^*$ and the 3-hour viscosity $\eta^{*'}$ were 3,100 mPa•s and more than 4,500 mPa•s, respectively, leading to a short pot life and an inferior workability.

In addition, fiber reinforced composite material was prepared from the epoxy resin composition by the aforementioned pultrusion molding method and examined by the aforementioned method, and it was found that the fiber reinforced composite material contained voids in its interior, indicating inferior impregnation.

[Table 1]

[Table 1]

| Constitution | Components | | Example 1 | Example 2 | Example 3 | Example 4 | Example 5 | Example 6 |
|---|---|---|---|---|---|---|---|---|
| Component [A] | Araldite MY721 | N,N,N',N'-tetraglycidyl-4,4'-diaminodiphenyl methane | 80 | 80 | 45 | 75 | - | - |
| | jER 806 | liquid bisphenol F type epoxy resin | - | - | 30 | - | 21 | 16 |
| | YDF2001 | solid bisphenol F type epoxy resin | - | - | - | - | 10 | 10 |
| | Araldite MY0510 | p-aminophenol type epoxy resin | - | - | - | - | 20 | 20 |
| | jER 154 | phenol novolac type epoxy resin | - | - | - | - | - | - |
| | Tetrad X | N,N,N',N'-tetraglyeidyl- m-xylylene diamine | - | - | - | - | - | - |
| | jER YX4000 | biphenyl type epoxy resin | - | - | - | - | - | - |
| | Epicron HP4700 | naphthalene type epoxy resin | - | - | - | - | - | - |
| | Epicron HP7200 | dicyclopentadiene type epoxy resin | - | - | - | - | - | - |
| | NC3000 | biphenyl aralkyl type epoxy resin | - | - | - | - | - | - |
| | Epicron EXA1514 | bisphenol S type epoxy resin | - | - | - | - | - | - |
| | GAN | N,N-diglycidyl aniline | - | - | - | - | - | - |
| Components [A] + [E] | Kane Ace MX-113 (D.E.R.383/core shell polymer particles = 67/33) | D.E.R.383 (component [A]) | - | - | - | - | - | 34 |
| | | core shell polymer particles (component [E]) | - | - | - | - | - | 17 |
| | Kane Ace MX-267 (Epon863/core shell polymer particles = 63/37) | Epon863 (component [A]) | - | - | - | 15 | 34 | - |
| | | core shell polymer particles (component [E]) | - | - | - | 8.8 | 19 | - |
| | Kane Ace MX-416 (Araldite MY721/ core shell polymer particles = 75/25) | Araldite MY721 (component [A]) | 15 | 15 | 15 | - | - | - |
| | | core shell polymer particles (component [E]) | 5 | 5 | 5 | - | - | - |

EP 2 810 987 B1

14

(continued)

| Constitution | Components | | Example 1 | Example 2 | Example 3 | Example 4 | Example 5 | Example 6 |
|---|---|---|---|---|---|---|---|---|
| Component [B] | Denacol EX-211 | neopentyl glycol diglycidyl ether | 5 | 5 | 10 | 10 | 15 | 20 |
| | Denacol EX-411 | pentaerythritol polyglycidyl ether | - | - | - | - | - | - |
| Epoxy resin other than components [A] and [B] | Celloxide 2021P | alicyclic epoxy resin | - | - | - | - | - | - |
| Component [C] | HN2200 | methyl tetrahydrophthalic anhydride | 133 | - | 119 | 125 | 101 | 100 |
| | Kayahard MCD | methyl endo-methylene tetrahydrophthalic anhydride | - | 157 | - | - | - | - |
| Component [D] | U-CAT SA102 | DBU/2-ethyl hexanoic acid | - | 1 | 2 | 2 | 1 | - |
| | U-CAT SA841 | DBU/phenol novolac resin salt | 2.5 | - | - | - | - | 1 |
| | U-CAT SA1 | DBU/phenol salt | - | - | - | - | - | - |
| Curing catalyst other than component [D] | Curezol 1B2MZ | 1-benzyl-2-methyl imidazole | - | - | - | - | - | - |
| Heating temperature | | | - | - | - | - | 100 | 100 |
| Characteristics of resin composition | 25°C viscosity $\eta$* [mPa•s] | | 705 | 2,150 | 740 | 690 | 410 | 480 |
| | 25°C viscosity $\eta$*' in 3 hours [mPa·s] | | 1,520 | 3,250 | 1,520 | 1,400 | 700 | 795 |
| Characteristics of cured material | fracture toughness of cured material ($K_{Ic}$)[MPa•m$^{0.5}$] | | 0.5 | 0.5 | 0.6 | 0.5 | 1.3 | 1.0 |
| | Tc [°C] | | 180 | 180 | 180 | 180 | 135 | 135 |
| | Tg of cured material for 1 | | 210 | 212 | 190 | 200 | 130 | 130 |
| | Equation (1) Tg $\geq$ Tc - 15 [°C] | | TRUE | TRUE | TRUE | TRUE | TRUE | TRUE |
| Fiber reinforced composite material | impregnation (reinforcement fiber: Torayca T700SC-12000) | | good | good | good | good | good | good |

[Table 2]

[Table 2]

| Constitution | Components | | Example 7 | Example 8 | Example 9 | Example 10 | Example 11 | Example 12 |
|---|---|---|---|---|---|---|---|---|
| Component [A] | Araldite MY721 | N,N,N',N'-tetraglyeidyl-4,4'-diaminodiphenyl methane | - | - | - | 88.7 | - | - |
| | jER 806 | liquid bisphenol F type epoxy resin | - | - | - | - | 32.4 | 26 |
| | YDF2001 | solid bisphenol F type epoxy resin | 10 | 10 | - | - | - | - |
| | Araldite MY0510 | p-aminophenol type epoxy resin | 20 | - | - | - | 30 | - |
| | jER 154 | phenol novolac type epoxy resin | - | - | - | - | 15 | - |
| | Tetrad X | N,N,N',N'-tetraglycidyl-m-xylylene diamine | - | - | - | - | - | 50 |
| | jER YX4000 | biphenyl type epoxy resin | - | - | - | - | - | - |
| | Epicron HP4700 | naphthalene type epoxy resin | - | - | - | - | - | - |
| | Epicron HP7200 | dicyclopentadiene type epoxy resin | - | - | - | - | - | - |
| | NC3000 | biphenyl aralkyl type epoxy resin | - | - | - | - | - | - |
| | Epicron EXA1514 | bisphenol S type epoxy resin | - | - | - | - | - | - |
| | GAN | N,N-diglycidyl aniline | - | - | - | - | - | - |
| Component [A] + [E] | Kane Ace MX-113 (D.E.R.3 83/core shell polymer particles = 67/33) | D.E.R.383 (component [A]) | 50 | 60 | 60 | - | - | - |
| | | core shell polymer particles (component [E]) | 25 | 30 | 30 | - | - | - |
| | Kane Ace MX-267 (Epon863/core shell polymer particles = 63/37) | Epon863 (component [A]) | - | - | - | 6.3 | 12.6 | 19 |
| | | core shell polymer particles (component [E]) | - | - | - | 3.7 | 7.4 | 11 |
| | Kane Ace MX-416 (Araldite MY721/core shell polymer particles = 75/25) | Araldite MY721 (component [A]) | - | - | - | - | - | - |
| | | core shell polymer particles (component [E]) | - | - | - | - | - | - |
| Component [B] | Denacol EX-211 | neopentyl glycol diglycidyl ether | 20 | 30 | 40 | 5 | 10 | - |
| | Denacol EX-411 | pentaerythritol polyglycidyl ether | - | - | - | - | - | 5 |

EP 2 810 987 B1

(continued)

| Constitution | Components | | Example 7 | Example 8 | Example 9 | Example 10 | Example 11 | Example 12 |
|---|---|---|---|---|---|---|---|---|
| Epoxy resin other than components [A] and [B] | Celloxide 2021P | alicyclic epoxy resin | - | - | - | - | - | - |
| Component [C] | HN2200 | methyl tetrahydrophthalic anhydride | 99 | 87 | 95 | 130 | - | - |
| | Kayahard MCD | methyl endo-methylene tetrahydrophthalic anhydride | - | - | - | - | 132 | 141 |
| Component [D] | U-CAT SA102 | DBU/2-ethyl hexanoic acid | 1 | 3 | 1 | 4 | 2 | 2 |
| | U-CAT SA841 | DBU/phenol novolac resin salt | - | - | - - | - | - | - |
| | U-CAT SA1 | DBU/phenol salt | - | - | - | - | - | - |
| Curing catalyst other than component [D] | Curezol 1B2MZ | 1-benzyl- 2-methyl imidazole | - | - | - | - | - | - |
| Heating temperature | | | 100 | 100 | - | - | - | - |
| Characteristics of resin composition | 25°C viscosity $\eta *$ [mPa•s] | | 635 | 640 | 390 | 310 | 615 | 1,750 |
| | 25°C viscosity $\eta *'$ in 3 hours [mPa•s] | | 1,340 | 1,860 | 690 | 647 | 1,350 | 3,100 |
| Characteristics of cured material | fracture toughness of cured material ($K_{IC}$) [MPa•m$^{0.5}$] | | 1.1 | 1.1 | 1.0 | 0.4 | 0.7 | 0.5 |
| | Tc [°C] | | 135 | 135 | 135 | 180 | 135 | 180 |
| | cured material Tg [°C] | | 133 | 130 | 105 | 191 | 143 | 192 |
| | Equation (1) Tg $\geq$ Tc -15 [°C] | | TRUE | TRUE | FALSE | TRUE | TRUE | TRUE |
| Fiber reinforced composite material | impregnation (reinforcement fiber: Torayca T700SC-12000) | | good | good | good | good | good | good |

EP 2 810 987 B1

[Table 3]

[Table 3]

[Table 3]

| Constitution | Components | | Example 13 | Example 14 | Example 15 | Example 16 | Example 17 | Example 18 |
|---|---|---|---|---|---|---|---|---|
| Component [A] | Araldite MY721 | N,N,N',N'-tetraglycidyl-4,4'-diaminodiphenyl methane | 35 | 35 | - | - | 35 | 35 |
| | jER 806 | liquid bisphenol F type epoxy resin | 30 | 30 | 32.4 | 32.4 | 30 | 30 |
| | YDF2001 | solid bisphenol F type epoxy resin | - | - | - | - | - | 10 |
| | Araldite MY0510 | p-aminophenol type epoxy resin | - | - | 35 | 30 | - | - |
| | jER 154 | phenol novolac type epoxy resin | - | - | - | - | - | - |
| | Tetrad X | N,N,N',N'-tetraglycidyl-m-xylylene diamine | - | - | - | - | - | - |
| | jER YX4000 | biphenyl type epoxy resin | 15 | - | - | - | - | - |
| | Epicron HP4700 | naphthalene type epoxy resin | - | 15 | - | - | - | - |
| | Epicron HP7200 | dicyclopentadiene type epoxy resin | - | - | 15 | - | - | - |
| | NC3000 | biphenyl aralkyl type epoxy resin | - | - | - | 15 | - | - |
| | Epicron EXA1514 | bisphenol S type epoxy resin | - | - | - | - | 13 | - |
| | GAN | N,N-diglycidyl aniline | - | - | - | - | - | 5 |
| Component [A] + [E] | Kane Ace MX-113 (D.E.R.383/core shell polymer particles = 67/33) | D.E.R.383 (component [A]) | - | - | - | - | - | - |
| | | core shell polymer particles (component [E]) | - | - | - | - | - | - |

EP 2 810 987 B1

| Constitution | Components | | | Example 13 | Example 14 | Example 15 | Example 16 | Example 17 | Example 18 |
|---|---|---|---|---|---|---|---|---|---|
| | Kane Ace MX-267 (Epon863/core shell polymer particles = 63/37) | Epon863 (component [A]) | | - | - | 12.6 | 12.6 | - | 15 |
| | | core shell polymer particles (component [E]) | | - | - | 7.4 | 7.4 | - | 8.8 |
| | Kane Ace MX-416 (Araldite MY721/core shell polymer particles = 75/25) | Araldite MY721 (component [A]) | | 15 | 15 | - | - | 15 | - |
| | | core shell polymer particles (component [E]) | | 5 | 5 | - | - | 5 | - |
| Component [B] | Denacol EX-211 | neopentyl glycol diglycidyl ether | | - | 5 | - | 10 | 7 | 5 |
| | Denacol EX-411 | pentaerythritol polyglycidyl ether | | 5 | - | 5 | - | - | - |
| Epoxy resin other than components [A] and [B] | Celloxide 2021P | alicyclic epoxy resin | | - | - | - | - | - | - |
| Component [C] | HN2200 | methyl tetrahydrophthalic anhydride | | 110 | 114 | - | 107 | 109 | 103 |
| | Kayahard MCD | methyl endo-methylene tetrahydrophthalic anhydride | | - | - | 127 | - | - | - |
| Component [D] | U-CAT SA102 | DBU/2-ethyl hexanoic acid | | 2 | 2 | 2 | 2 | 2 | - |
| | U-CAT SA841 | DBU/phenol novolac resin salt | | - | - | - | - | - | 2 |
| | U-CAT SA1 | DBU/phenol salt | | - | - | - | - | - | - |
| Curing catalyst other than component [D] | Curezol 1B2MZ | 1-benzyl- 2-methyl imidazole | | - | - | - | - | - | - |
| Heating temperature | | | | 150 | 150 | 150 | 100 | 130 | 100 |
| Characteristics of resin composition | 25°C viscosity $\eta$* [mPa•s] | | | 1,340 | 1,850 | 710 | 715 | 1,100 | 910 |
| | 25°C viscosity in 3 hours $\eta$*' [mPa•s] | | | 2,400 | 3,650 | 1,320 | 1,410 | 2,050 | 1,750 |

| Constitution | Components | Example 13 | Example 14 | Example 15 | Example 16 | Example 17 | Example 18 |
|---|---|---|---|---|---|---|---|
| Characteristics of cured material | fracture toughness of cured material ($K_{IC}$) [MPa•m$^{0.5}$] | 0.7 | 0.7 | 0.8 | 0.8 | 0.8 | 0.9 |
| | Tc [°C] | 135 | 135 | 135 | 135 | 135 | 135 |
| | cured material Tg [°C] | 145 | 150 | 140 | 133 | 143 | 134 |
| | Equation (1) Tg ≥ Tc - 15 [°C] | TRUE | TRUE | TRUE | TRUE | TRUE | TRUE |
| Fiber reinforced composite material | impregnation (reinforcement fiber: Torayca T700SC-12000) | good | good | good | good | good | good |

EP 2 810 987 B1

[Table 4]

[Table 4]

[Table 4]

| Constitution | Components | | Example 19 | Example 20 | Example 21 | Example 22 | Example 23 | Example 24 |
|---|---|---|---|---|---|---|---|---|
| Component [A] | Araldite MY721 | N,N,N',N'-tetraglycidyl-4,4'-diamino diphenyl methane | - | - | - | - | - | - |
| | jER 806 | liquid bisphenol F type epoxy resin | 44.4 | 52 | 44.4 | 22.4 | 17.4 | 22.4 |
| | YDF2001 | solid bisphenol F type epoxy resin | 15 | 15 | 15 | 15 | 15 | 15 |
| | Araldite MY0510 | p-aminophenol type epoxy resin | 20 | 20 | 20 | 20 | 20 | 20 |
| | jER 154 | phenol novolac type epoxy resin | - | - | - | - | - | - |
| | Tetrad X | N,N,N',N'-tetraglycidyl-m-xylylene diamine | - | - | - | - | - | - |
| | jER YX4000 | biphenyl type epoxy resin | - | - | - | - | - | - |
| | Epicron HP4700 | naphthalene type epoxy resin | - | - | - | - | - | - |
| | Epicron HP7200 | dicyclopentadiene type epoxy resin | - | - | - | - | - | - |
| | NC3000 | biphenyl aralkyl type epoxy resin | - | - | - | - | - | - |
| | Epicron EXA1514 | bisphenol S type epoxy resin | - | - | - | - | - | - |
| | GAN | N,N-diglycidyl aniline | - | - | - | - | - | - |
| Component [A] +[E] | Kane Ace MX-113 (D.E.R.383/core shell polymer particles = 67/33) | D.E.R.383 (component [A]) | - | - | - | - | - | - |
| | | core shell polymer particles (component [E]) | - | - | - | - | - | - |

(continued)

| Constitution | Components | | Example 19 | Example 20 | Example 21 | Example 22 | Example 23 | Example 24 |
|---|---|---|---|---|---|---|---|---|
| | Kane Ace MX-267 (Epon863/core shell polymer particles = 63/37) | Epon863 (component [A]) | 12.6 | 5 | 12.6 | 12.6 | 12.6 | 12.6 |
| | | core shell polymer particles (component [E]) | 7.4 | 3 | 7.4 | 7.4 | 7.4 | 7.4 |
| | Kane Ace MX-416 (Araldite MY721/core shell polymer particles = 75/25) | Araldite MY721 (component [A]) | - | - | - | - | - | - |
| | | core shell polymer particles (component [E]) | - | - | - | - | - | - |
| Component [B] | Denacol EX-211 | neopentyl glycol diglycidyl ether | 8 | 8 | 8 | 8 | 8 | 20 |
| | Denacol EX-411 | pentaerythritol polyglycidyl ether | - | - | - | - | - | - |
| Epoxy resin other than components [A] and [B] | Celloxide 2021P | alicyclic epoxy resin | - | - | - | 22 | 27 | 10 |
| Component [C] | HN2200 | methyl tetrahydrophthalic anhydride | - | - | - | - | - | - |
| | Kayahard MCD | methyl endo-methylene tetrahydrophthalic anhydride | 114 | 115 | 114 | 119 | 121 | 119 |
| Component [D] | U-CAT SA102 | DBU/2-ethyl hexanoic acid | 3 | 3 | 4 | 3 | 3 | 3 |
| | U-CAT SA841 | DBU/phenol novolac resin salt | - | - | - | - | - | - |
| | U-CAT SA1 | DBU/phenol salt | - | - | - | - | - | - |
| Curing catalyst other than component [D] | Curezol 1B2MZ | 1-benzyl- 2-methyl imidazole | - | - | - | - | - | - |
| Heating temperature | | | 100 | 100 | 100 | 100 | 100 | 100 |
| Characteristics of resin composition | 25°C viscosity $\eta^*$ [mPa·s] | | 2,700 | 2,650 | 2,710 | 2,400 | 1,900 | 860 |
| | 25°C viscosity in 3 hours $\eta^{*'}$ [mPa·s] | | 3,990 | 3,950 | 4,400 | 3,500 | 2,780 | 1,900 |

(continued)

| Constitution | Components | Example 19 | Example 20 | Example 21 | Example 22 | Example 23 | Example 24 |
|---|---|---|---|---|---|---|---|
| Characteristics of cured material | fracture toughness of cured material ($K_{IC}$) [MPa·m$^{0.5}$] | 0.8 | 0.4 | 0.8 | 0.6 | 0.5 | 0.7 |
| | Tc [°C] | 135 | 135 | 135 | 135 | 135 | 135 |
| | cured material Tg [°C] | 136 | 135 | 140 | 120 | 115 | 125 |
| | Equation (1) Tg ≥ Tc - 15 [°C] | TRUE | TRUE | TRUE | TRUE | FALSE | TRUE |
| Fiber reinforced composite material | impregnation (reinforcement fiber: Torayca T700SC-12000) | good | good | good | good | good | good |

[Table 5]

[Table 5]

[Table 5]

| Constitution | Components | | Example 25 | Example 26 | Example 27 | Example 28 | Example 29 | Example 30 | Example 31 |
|---|---|---|---|---|---|---|---|---|---|
| Component [A] | Araldite MY721 | N,N,N',N'-tetraglycidyl-4,4'-diaminodiphenyl methane | - | - | - | - | - | 50 | 30 |
| | jER 806 | liquid bisphenol F type epoxy resin | 44.4 | 16 | 16 | 43 | 6 | 30 | 50 |
| | YDF2001 | solid bisphenol F type epoxy resin | 15 | 15 | 15 | 10 | 10 | - | - |
| | Araldite MY0510 | p-aminophenol type epoxy resin | 20 | 15 | 15 | 20 | 20 | - | - |
| | jER 154 | phenol novolac type epoxy resin | - | - | - | - | - | - | - |
| | Tetrad X | N,N,N',N'-tetraglycidyl-m-xylylene diamine | - | - | - | - | - | - | - |
| | jER YX4000 | biphenyl type epoxy resin | - | - | - | - | - | - | - |
| | Epicron HP4700 | naphthalene type epoxy resin | - | - | - | - | - | - | - |
| | Epicron HP7200 | dicyclopentadiene type epoxy resin | - | - | - | - | - | - | - |
| | NC3000 | biphenyl aralkyl type epoxy resin | - | - | - | - | - | - | - |
| | Epicron EXA1514 | bisphenol S type epoxy resin | - | - | - | - | - | - | - |
| | GAN | N,N-diglycidyl aniline | - | - | - | - | - | - | - |
| Component [A] +[E] | Kane Ace MX-113 (D.E.R.383/core shell polymer particles = 67/33) | D.E.R.383 (component [A]) | - | 34 | 34 | - | - | - | - |
| | | core shell polymer particles (component [E]) | - | 17 | 17 | - | - | - | - |

EP 2 810 987 B1

28

| Constitution | Components | | Example 25 | Example 26 | Example 27 | Example 28 | Example 29 | Example 30 | Example 31 |
|---|---|---|---|---|---|---|---|---|---|
| | Kane Ace MX-267 (Epon863/core shell polymer particles = 63/37) | Epon863 (component [A]) | 12.6 | - | - | 17 | 54 | - | - |
| | | core shell polymer particles (component [E]) | 7.4 | - | - | 10 | 32 | - | - |
| | Kane Ace MX-416 (Araldite MY721/core shell polymer particles = 75/25) | Araldite MY721 (component [A]) | - | - | - | - | - | 15 | 15 |
| | | core shell polymer particles (component [E]) | - | - | - | - | - | 5 | 5 |
| Component [B] | Denacol EX-211 | neopentyl glycol diglycidyl ether | 1 | 20 | 20 | 10 | 10 | 5 | 5 |
| | Denacol EX-411 | pentaerythritol polyglycidyl ether | | | | - | - | - | - |
| Epoxy resin other than components [A] and [B] | Celloxide 2021P | alicyclic epoxy resin | 5 | - | - | - | - | - | - |
| Component [C] | HN2200 | methyl tetrahydrophthalic anhydride | - | 94 | 94 | - | - | 120 | 112 |
| | Kayahard MCD | methyl endo-methylene tetrahydrophthalic anhydride | 115 | - | - | 118 | 118 | - | - |
| Component [D] | U-CAT SA102 | DBU/2-ethyl hexanoic acid | 3 | 0.5 | 0.1 | 2 | 2 | - | - |
| | U-CAT SA841 | DBU/phenol novolac resin salt | - | - | - | - | - | 2.5 | 2.5 |
| | U-CAT SA1 | DBU/phenol salt | - | - | - | - | - | - | - |
| Curing catalyst other than component [D] | Curezol 1B2MZ | 1-benzyl- 2-methyl imidazole | - | - | - | - | - | - | - |
| Heating temperature | | | 100 | 100 | 100 | 100 | 100 | - | - |

EP 2 810 987 B1

(continued)

| Constitution | Components | Example 25 | Example 26 | Example 27 | Example 28 | Example 29 | Example 30 | Example 31 |
|---|---|---|---|---|---|---|---|---|
| Characteristics of resin composition | 25°C viscosity $\eta *$ [mPa·s] | 2,870 | 655 | 650 | 1,950 | 2,850 | 710 | 725 |
| | 25°C viscosity in 3 hours $\eta *$' [mPa·s] | 4,300 | 1,050 | 820 | 3,200 | 4,350 | 1,385 | 1,340 |
| Characteristics of cured material | fracture toughness of cured material ($K_{IC}$) [MPa·m$^{0.5}$] | 0.8 | 0.9 | 0.6 | 1.2 | 1.5 | 0.6 | 0.6 |
| | Tc [°C] | 135 | 135 | 135 | 135 | 135 | 180 | 180 |
| | cured material Tg [°C] | 134 | 130 | 115 | 140 | 139 | 195 | 185 |
| | Equation (1) Tg ≥ Tc -15 [°C] | TRUE | TRUE | FALSE | TRUE | TRUE | TRUE | TRUE |
| Fiber reinforced composite material | impregnation (reinforcement fiber: Torayca T700SC-12000) | good | good | good | good | good | good | good |

[Table 6]

[Table 6]

[Table 6]

| Constitution | Components | | Example 32 | Example 33 | Comparative example 1 | Comparative example 2 | Comparative example 3 | Comparative example 4 |
|---|---|---|---|---|---|---|---|---|
| Component [A] | Araldite MY721 | N,N,N',N'-tetraglycidyl-4,4'-diaminodiphenyl methane | - | - | 95 | 95 | - | - |
| | jER 806 | liquid bisphenol F type epoxy resin | 43 | 33 | - | - | 16 | 53 |
| | YDF2001 | solid bisphenol F type epoxy resin | 10 | 10 | - | - | 15 | 10 |
| | Araldite MY0510 | p-aminophenol type epoxy resin | 20 | 20 | - | - | 15 | 20 |
| | jER 154 | phenol novolac type epoxy resin | - | - | - | - | - | - |
| | Tetrad X | N,N,N',N'-tetraglycidyl-m-xylylene diamine | - | - | - | - | - | - |
| | jER YX4000 | biphenyl type epoxy resin | - | - | - | - | - | - |
| | Epicron HP4700 | naphthalene type epoxy resin | - | - | - | - | - | - |
| | Epicron HP7200 | dicyclopentadiene type epoxy resin | - | - | - | - | - | - |
| | NC3000 | biphenyl aralkyl type epoxy resin | - | - | - | - | - | - |
| | Epicron EXA1514 | bisphenol S type epoxy resin | - | - | - | - | - | - |
| | GAN | N,N-diglycidyl aniline | - | - | - | - | - | - |
| Component [A] +[E] | Kane Ace MX-113 (D.E.R.383/core shell polymer particles = 67/33) | D.E.R.383 (component [A]) | - | - | - | - | 34 | - |
| | | core shell polymer particles (component [E]) | - | - | - | - | 17 | - |

EP 2 810 987 B1

32

| Constitution | Components | | Example 32 | Example 33 | Comparative example 1 | Comparative example 2 | Comparative example 3 | Comparative example 4 |
|---|---|---|---|---|---|---|---|---|
| | Kane Ace MX-267 (Epon863/core shell polymer particles = 63/37) | Epon863 (component [A]) | 17 | 17 | - | - | - | 17 |
| | | core shell polymer particles (component [E]) | 10 | 10 | - | - | - | 10 |
| | Kane Ace MX-416 (Araldite MY721 /core shell polymer particles = 75/25) | Araldite MY721 (component [A]) | - | - | - | - | - | - |
| | | core shell polymer particles (component [E]) | - | - | - | - | - | - |
| Component [B] | Denacol EX-211 | neopentyl glycol diglycidyl ether | 10 | - | 5 | 5 | 20 | - |
| | Denacol EX-411 | pentaerythritol polyglycidyl ether | - | 20 | - | - | - | - |
| Epoxy resin other than components [A] and [B] | Celloxide 2021P | alicyclic epoxy resin | - | - | - | - | - | - |
| Component [C] | HN2200 | methyl tetrahydrophthalic anhydride | - | - | 133 | - | 94 | - |
| | Kayahard MCD | methyl endo-methylene tetrahydrophthalic anhydride | 118 | 110 | - | 157 | - | 116 |
| Component [D] | U-CAT SA102 | DBU/2-ethyl hexanoic acid | - | 2 | - | 3 | - | 2 |
| | U-CAT SA841 | DBU/phenol novolac resin salt | - | - | - | - | - | - |
| | U-CAT SA1 | DBU/phenol salt | 2 | - | - | - | - | - |
| Curing catalyst other than component [D] | Curezol 1B2MZ | 1-benzyl- 2-methyl imidazole | - | - | 3 | - | - | - |
| Heating temperature | | | 100 | 100 | - | - | 100 | 100 |

33

(continued)

| Constitution | Components | Example 32 | Example 33 | Comparative example 1 | Comparative example 2 | Comparative example 3 | Comparative example 4 |
|---|---|---|---|---|---|---|---|
| Characteristics of resin composition | 25°C viscosity $\eta^*$ [mPa·s] | 1,960 | 2,700 | 685 | 2,100 | 650 | 3,100 |
| | 25°C viscosity in 3 hours $\eta^{*'}$ [mPa·s] | 4,200 | 3,500 | > 4,500 | 3,410 | 725 | > 4,500 |
| Characteristics of cured material | fracture toughness of cured material ($K_{IC}$) [MPa·m$^{0.5}$] | 1.2 | 1.4 | 0.5 | 0.3 | 0.3 | 1.2 |
| | Tc [°C] | 135 | 135 | 180 | 180 | 135 | 135 |
| | cured material Tg [°C] | 142 | 141 | 195 | 220 | 70 | 140 |
| | Equation (1) Tg ≥ Tc - 15 [°C] | TRUE | TRUE | TRUE | TRUE | FALSE | TRUE |
| Fiber reinforced composite material | impregnation (reinforcement fiber: Torayca T700SC-12000) | good | good | inferior | good | good | inferior |

**EP 2 810 987 B1**

[Industrial applicability]

The epoxy resin composition according to the present invention has a low viscosity and a long pot life, and accordingly, serves suitably for continuous impregnation of bundles of reinforcing fiber. Therefore, the epoxy resin composition according to the present invention can be used favorably for filament winding molding or pultrusion molding in particular. In addition, since its cured product has a high heat resistance and toughness, fiber reinforced composite material produced from the epoxy resin composition according to the present invention has a high heat resistance and toughness. With this feature, the fiber reinforced composite material according to the present invention can serve for a variety of fields including aerospace, automobiles, railroad vehicles, ships, civil engineering construction, and sporting goods.

**Claims**

1. An epoxy resin composition comprising at least components [A] to [E] given below, having a viscosity of 3,000 mPa·s or less at 25°C, and showing a viscosity of 4,500 mPa·s or less 3 hours after the start of measurement when subjected to continued measurement for 3 hours at a temperature of 25°C:

    [A] epoxy resin having an aromatic ring in a molecule,
    [B] aliphatic epoxy resin having a neopentyl structure in a molecule,
    [C] acid anhydride,
    [D] salt of either diazabicycloundecene or diazabicyclononene and an organic compound,
    [E] core shell polymer particles.

2. An epoxy resin composition as defined in claim 1, wherein component [D] is a salt of diazabicycloundecene and 2-ethyl hexanoic acid or a salt of diazabicycloundecene and phenol resin.

3. An epoxy resin composition as defined in either claim 1 or 2, wherein component [B] is either neopentyl glycol diglycidyl ether or pentaerythritol polyglycidyl ether.

4. An epoxy resin composition as defined in any one of claims 1 to 3, wherein component [A] accounts for 70 to 95 parts by mass of the total 100 parts by mass of all the epoxy resin components.

5. An epoxy resin composition as defined in any one of claims 1 to 4, wherein component [B] accounts for 5 to 30 parts by mass of the total 100 parts by mass of all the epoxy resin components.

6. An epoxy resin composition as defined in any one of claims 1 to 5, wherein component [D] accounts for 0.1 to 3 parts by mass per 100 parts by mass of all the epoxy resin components.

7. An epoxy resin composition as defined in any one of claims 1 to 6, wherein component [E] accounts for 5 to 30 parts by mass per 100 parts by mass of all the epoxy resin components.

8. An epoxy resin composition as defined in any one of claims 1 to 7, wherein a cured product produced by curing at a temperature of 180°C for 2 hours has a $K_{Ic}$ of 0.5 MPa·m$^{0.5}$ or more as measured according to ASTM D5045.

9. An epoxy resin composition as defined in any one of claims 1 to 8, wherein cured products produced by curing the epoxy resin composition at a curing temperature of Tc (°C) for 2 hours have a glass transition temperature Tg (°C) as measured by JIS K7121 (1987) that meets Equation (1) given below:

$$Tg \geq Tc - 15 \ (°C) \qquad \text{Equation (1)}.$$

10. Fiber reinforced composite material comprising reinforcement fiber and a cured product of an epoxy resin composition as claimed in any one of claims 1 to 9.

11. Fiber reinforced composite material as claimed in claim 10, wherein the reinforcing fiber is carbon fiber having a tensile modulus in the range of 180 to 400 GPa.

**Patentansprüche**

1. Epoxidharzzusammensetzung, die zumindest die unten angegebenen Komponenten [A] bis [E] umfasst, eine Viskosität bei 25 °C von 3000 mPa·s oder weniger und 3 h nach Beginn der Messung, wenn sie 3 h lang einer kontinuierlichen Messung unterzogen wurde, eine Viskosität bei 25 °C von 4500 mPa·s oder weniger aufweist:

   [A] Epoxidharz mit einem aromatischen Ring im Molekül,
   [B] aliphatisches Epoxidharz mit einer Neopentyl-Struktur im Molekül,
   [C] Säureanhydrid,
   [D] Salz von entweder Diazabicycloundecen oder Diazabicyclononen und einer organischen Verbindung,
   [E] Kernhüllenpolymerpartikel.

2. Epoxidharzzusammensetzung nach Anspruch 1, worin Komponente [D] ein Salz von Diazabicycloundecen und 2-Ethylhexansäure oder ein Salz von Diazabicycloundecen und Phenolharz ist.

3. Epoxidharzzusammensetzung nach Anspruch 1 oder 2, worin Komponente [B] entweder Neopentylglykoldiglycidylether oder Pentaerythritpolyglycidylether ist.

4. Epoxidharzzusammensetzung nach einem der Ansprüche 1 bis 3, worin Komponente [A] 70 bis 95 Massenteile der insgesamt 100 Massenteile aller Epoxidharz-Komponenten ausmacht.

5. Epoxidharzzusammensetzung nach einem der Ansprüche 1 bis 4, worin Komponente [B] 5 bis 30 Massenteile der insgesamt 100 Massenteile aller Epoxidharz-Komponenten ausmacht.

6. Epoxidharzzusammensetzung nach einem der Ansprüche 1 bis 5, worin Komponente [D] 0,1 bis 3 Massenteile pro 100 Massenteile aller Epoxidharz-Komponenten ausmacht.

7. Epoxidharzzusammensetzung nach einem der Ansprüche 1 bis 6, worin Komponente [E] 5 bis 30 Massenteile pro 100 Massenteile aller Epoxidharz-Komponenten ausmacht.

8. Epoxidharzzusammensetzung nach einem der Ansprüche 1 bis 7, worin ein gehärtetes Produkt, das durch Härten bei einer Temperatur von 180 °C über 2 h lang hergestellt wurde, eine gemäß ASTM D5045 gemessene $K_{Ic}$ von 0,5 MPa·m$^{0,5}$ oder mehr aufweist.

9. Epoxidharzzusammensetzung nach einem der Ansprüche 1 bis 8, worin gehärtete Produkte, die durch Härten der Epoxidharzzusammensetzung bei einer Härtungstemperatur Tc (°C) über 2 h hergestellt wurden, eine gemäß JIS K7121 (1987) gemessene Glasübergangstemperatur Tg (°C) aufweisen, die der unten angeführten Gleichung (1) genügt:

$$\text{Tg} \geq \text{Tc} - 15\,°C \qquad\qquad \text{Gleichung (1)}.$$

10. Faserverstärktes Verbundmaterial, das Verstärkungsfasern und ein gehärtetes Produkt aus einer Epoxidharzzusammensetzung nach einem der Ansprüche 1 bis 9 umfasst.

11. Faserverstärktes Verbundmaterial nach Anspruch 10, worin die Verstärkungsfaser eine Kohlenstofffaser mit einem Zugelastizitätsmodul im Bereich von 180 bis 400 GPa ist.

**Revendications**

1. Composition de résine époxy comprenant au moins les composants [A] à [E] indiqués ci-dessous, ayant une viscosité de 3000 mPa.s ou moins à 25°C, et présentant une viscosité de 4500 mPa.s ou moins 3 heures après le début de la mesure quand elle est soumise à une mesure continue pendant 3 heures à une température de 25°C :

   [A] une résine époxy ayant un cycle aromatique dans sa molécule,
   [B] une résine époxy aliphatique ayant une structure de néopentyle dans sa molécule,

[C] un anhydride d'acide,

[D] un sel soit de diazabicycloundécène soit de diazabicyclononène et d'un composé organique,

[E] des particules polymères coeur-gaine.

2. Composition de résine époxy selon la revendication 1, dans laquelle le composant [D] est un sel de diazabicycloundécène et d'acide 2-éthylhexanoïque ou un sel de diazabicycloundécène et de résine phénolique.

3. Composition de résine époxy selon la revendication 1 ou 2, dans laquelle le composant [B] est soit l'éther diglycidylique de néopentylglycol soit un éther polyglycidylique de pentaérythritol.

4. Composition de résine époxy selon l'une quelconque des revendications 1 à 3, dans laquelle le composant [A] représente 70 à 95 parties en masse des 100 parties en masse au total de tous les composants de résine époxy.

5. Composition de résine époxy selon l'une quelconque des revendications 1 à 4, dans laquelle le composant [B] représente 5 à 30 parties en masse des 100 parties en masse au total de tous les composants de résine époxy.

6. Composition de résine époxy selon l'une quelconque des revendications 1 à 5, dans laquelle le composant [D] représente 0,1 à 3 parties en masse des 100 parties en masse au total de tous les composants de résine époxy.

7. Composition de résine époxy selon l'une quelconque des revendications 1 à 6, dans laquelle le composant [E] représente 5 à 30 parties en masse des 100 parties en masse au total de tous les composants de résine époxy.

8. Composition de résine époxy selon l'une quelconque des revendications 1 à 7, dans laquelle un produit durci, produit par durcissement à une température de 180°C pendant 2 heures, a une valeur $K_{Ic}$ de 0,5 MPa·m$^{0,5}$ ou plus, telle que mesurée conformément à la norme ASTM D5045.

9. Composition de résine époxy selon l'une quelconque des revendications 1 à 8, dans laquelle des produits durcis, produits par durcissement de la composition de résine époxy à une température de durcissement Tc (°C) pendant 2 heures, ont une température de transition vitreuse Tg (°C), telle que mesurée conformément à la norme JIS K7121 (1987), qui satisfait à l'Equation (1) indiquée ci-dessous :

$$\text{Tg} \geq \text{Tc} - 15 \ (°C) \qquad\qquad \text{Equation (1)}$$

10. Matériau composite renforcé par des fibres comprenant des fibres de renforcement et un produit durci d'une composition de résine époxy selon l'une quelconque des revendications 1 à 9.

11. Matériau composite renforcé par des fibres selon la revendication 10, dans lequel les fibres de renforcement sont des fibres de carbone ayant un module en traction situé dans la plage allant de 180 à 400 GPa.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005343112 A
- JP 2011089071 A
- JP SHO5882755 B
- JP HEI7149952 B
- JP 2008195782 A
- JP 2004315572 A